# EUROPEAN PATENT SPECIFICATION

(11) **EP 4 316 909 B1**
(45) Date of publication and mention of the grant of the patent: **20.08.2025**
(21) Application number: 21933799.5
(22) Date of filing: 31.03.2021
(51) Int. Cl.: B60Q 1/00, G03B 21/00, H04N 9/31, F21W 103/60, B60Q 1/50, B60Q 1/26, B60Q 1/32

(54) **VEHICLE COURTESY PROJECTION SYSTEM AND VEHICLE**
FAHRZEUGINNENPROJEKTIONSSYSTEM UND FAHRZEUG
SYSTÈME DE PROJECTION DE COURTOISIE DE VÉHICULE ET VÉHICULE

(43) Date of publication of application: 07.02.2024
(73) Proprietor: Zhejiang Smart Intelligence Technology Co., Ltd., Ningbo, Zhejiang 315336 (CN)
(72) Inventor: YANG, Jun, Hangzhou Bay New District Ningbo, Zhejiang 315336 (CN); FU, Qiang, Hangzhou Bay New District Ningbo, Zhejiang 315336 (CN); FANG, Mei, Hangzhou Bay New District Ningbo, Zhejiang 315336 (CN); ZHANG, Honghao, Hangzhou Bay New District Ningbo, Zhejiang 315336 (CN)
(74) Representative: Zaboliene, Reda
(86) International application number: PCT/CN2021/084558
(87) International publication number: WO 2022/205131

(56) References cited:
- EP-A1- 2 740 632
- CN-A- 109 204 114
- CN-A- 110 091 830
- CN-A- 113 542 703
- CN-U- 202 091 972
- CN-U- 209 419 748
- CN-U- 212 364 780
- KR-A- 20120 053 104
- US-A1- 2017 106 783
- US-A1- 2019 077 307
- US-A1- 2020 215 963
- US-A1- 2020 374 496

## Description

### TECHNICAL FIELD

The invention relates to the technical field of vehicle projection in particular to a vehicle courtesy projection system and a vehicle.

### BACKGROUND TECHNIQUE

With the popularization and application of light-emitting diodes in automobile lamps, electronic circuits and software are becoming more and more mature in the use of lamps, and the compatibility is becoming stronger and stronger. At the same time, the miniaturization of projection lamps makes it possible to apply projection lamps in automobiles.

At present, side projection lights with projection function have been developed at home and abroad, but they can only project static patterns and fixed pictures, and cannot update the projection content in real time.

EP2740632A1 discloses a lateral rearview mirror system (10) for a vehicle and a vehicle as well as a method and a corresponding application program product for operating a lateral rearview mirror system (10). Thereby the lateral rearview mirror system (10) comprises a projector (20) such as a laser beamer for projecting an image (40) to the environment of the vehicle. This way, an enhanced visual presentation and communication of information is achieved.US20170106783A1 discloses an adaptive cornering light system for a motor vehicle , and includes an exterior mirror head, housing at least one lighting module that having a plurality of LEDs arranged in sectors to provide different lighting functionalities. One LED or light sector is provided for adaptively illuminating a cornering area that extends along the side of the vehicle toward the front of the exterior mirror head. This "cornering LED" is adaptively activated if the speed of the vehicle is below a threshold speed, or in response to additional optional parameters such as steering angle, turn-signal blinker activation, and running lights activation. Another LED or light sector may be used as a security light to illuminate or display a message on the ground in the door area adjacent the side of the vehicle. Interior lights are also disclosed. User input may also control options for illumination.

US20200215963A1 discloses a vehicle headlamp (1), which is designed to form a light pattern in front of a vehicle, comprising a first microprocessor (100), a first memory (110), a control-channel control unit (120) and a first light module (211, 212) with in each case a first output unit (221, 222), and a second light module (213, 214) with in each case a second output unit (223, 224), wherein the vehicle headlamp (1) also comprises an object-channel control unit (130), a second microprocessor (101) and a second memory (90), and the object-channel control unit (130) is designed to receive a message concerning an object channel (131) from a second electronic system (61) of the vehicle and the second microprocessor (101) is designed to at least partially retrieve the message from the object-channel control unit (130) and use it to form image data, and the second microprocessor (101) is also designed to activate the output unit (223, 224) of the second light module (213, 214) by way of a video channel (250), wherein the output unit (223, 224) of the second light module (213, 214) is designed to produce from the control data and the image data of the second light module (213, 214) common data that describe a distribution of the light of a vehicle headlamp.

US20200374496A1 provides projection device, a projection method and a projection system. The projection system includes the projection device. The projection method is for controlling the projection device. The projection device includes a projection apparatus, a video and audio processing circuit and a power control circuit. The video and audio processing circuit is coupled to the projection apparatus. The power control circuit is coupled to the projection apparatus and the video and audio processing circuit. The power control circuit is for receiving a power signal correspondingly provided by an external power supply unit when a switchable mechanism is in an open state. The power control circuit enables the projection apparatus and the video and audio processing circuit according to the power signal, such that the video and audio processing circuit outputs image data to the projection apparatus and controls the projection apparatus to project a dynamic projection image.

US20190077307A1 discloses a method for customizing at least one parameter of a road marking function of a lighting system of a motor vehicle, the method including the following steps: driving the lighting system on the basis of an initial value of at least one parameter of a road marking function; displaying a graphical interface for controlling the parameter of the road marking function; upon reception of a command to modify the parameter, adjusting the driving of the road marking function in real time on the basis of the modification command.

### SUMMARY OF THE INVENTION

The invention aims to solve the technical problem that the projection lamp in the prior art cannot realize the user to customize the projection content according to the needs, so that the projection is relatively single.

In order to solve the above technical problems, the invention discloses a vehicle courtesy projection system, which includes a trigger module, a first control module and a projection module;
the trigger module connected with the first control module, and the first control module connected with the projection module;
the trigger module configured to receive a projection information sent by a client and send the projection information to the first control module;
the first control module configured to receive the projection information and control the projection module to project according to the projection information.

Further, the first control module is configured to:
receive projection instruction and projection content;
control the projection module to project the projected content according to the projection instruction.

Further, the projection instruction includes a start projection instruction, a pause projection instruction, a switch projection instruction and a close projection instruction.

The projection content includes a video, a dynamic pattern, a static pattern and a preset projection sequence.

Further, the trigger module includes a receiving module and a first memory module.

The receiving module is configured to receive the projection information and send the projection information to the first storage module;
the first storage module is configured to receive the projection information and store it.

Further, the projection module includes a projection component and a second control module;
the second control module connected with the first control module;
the first control module can send the projection information to the second control module, the second control module can control the projection component to project according to the projection information, and the second control module can store the projection information.

Further, the projection assembly includes at least one side projection lamp.

Further, the projection assembly is arranged in the exterior rearview mirror of the vehicle and/or on the door or on the door threshold position.

Further, the projection assembly includes a Liquid Crystal on Silicon (LCOS) display device, a Liquid Crystal display device, and a Liquid Crystal Display device (LCD) or a Digital Light Processing (DLP) projection device.

Further, the first control module and the projection module are connected by Low-Voltage Differential Signaling (LVDS), Ethernet or controller area network.

The second aspect of the invention relates to a vehicle, including the vehicle courtesy projection system.

By adopting the above technical scheme, the invention has the following beneficial effects:
the vehicle courtesy projection system disclosed in the invention is provided with a trigger module, which can receive the projection information sent by the client and send the projection information to the control module; the control module can control the projection module to project according to the projection information; this scheme can realize user-defined projection content and make the projection more diversified.

### DESCRIPTION OF DRAWINGS

In order to more clearly explain the technical scheme in the embodiments of the present invention, the supplementary drawings required in the description of the embodiments will be briefly introduced in the following. Obviously, the supplementary drawings described below are only some embodiments of the present invention. For ordinary technicians in the field, other supplementary drawings can be obtained according to these supplementary drawings without paying creative labor.
FIG. 1 shows a schematic diagram of a vehicle courtesy projection system in an embodiment of the invention.
FIG. 2 shows the working diagram of a vehicle courtesy projection system in an embodiment of the invention.

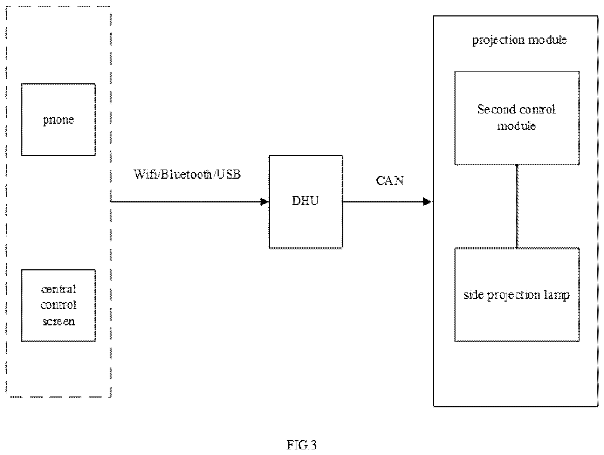

FIG. 3 shows the working diagram of a vehicle courtesy projection system in an embodiment of the invention.

### EMBODIMENTS OF THE PRESENT APPLICATION

"An embodiment" or "embodiment" herein means a particular feature, structure or feature that may be included in at least one realization of the invention. In the description of the embodiments of the present invention, it is to be understood that the terms "top", "bottom", "top", "bottom", etc., indicate the bearing or positional relationship based on the bearing or positional relationship shown in the attached drawings and are only for the convenience of describing the present invention and simplifying the description, and are not to indicate or imply that the device or element in question must have a particular bearing, be constructed and operate in a particular bearing. Therefore, it cannot be construed as a limitation of the present invention. Furthermore, the terms "first" and "second" are used for descriptive purposes only and are not to be understood as indicating or implying relative importance or implicitly indicating the number of technical features indicated. Thus, a feature defined as "first" or "second" may explicitly or implicitly includes one or more such features. Moreover, the terms "first", "second", etc., are configured to distinguish similar objects, not necessarily to describe a particular order or sequence. It should be understood that the data so used may be interchangeable where appropriate so that embodiments of the present invention described herein may be implemented in an order other than those illustrated or described herein.

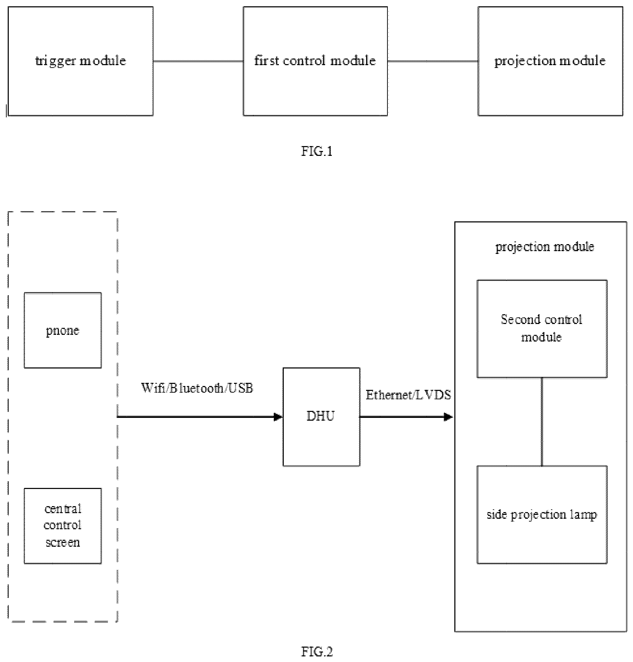

Please refer to FIG. 1, which is a schematic diagram of a vehicle courtesy projection system in an embodiment of the invention, including a trigger module, a first control module and a projection module;
the trigger module connected with the first control module, and the first control module connected with the projection module;
the trigger module configured to receive the projection information sent by a client and send the projection information to the first control module;
the first control module configured to receive the projection information and control the projection module to project according to the projection information.

The vehicle courtesy projection system disclosed in the invention is provided with a trigger module, which can receive the projection information sent by the client and send the projection information to the first control module; the first control module can control the projection module to project according to the projection information; this scheme can realize user-defined projection content and make the projection more diversified. According to the invention, the client comprises a smart phone. The projection information sent by the client can include the projection information that is customized by the user at the client.

In the embodiment of the invention, the trigger module can be a device such as a mobile phone or a central control screen of a vehicle, and the trigger module can also be a trigger unit integrated in a device such as a mobile phone or a central control screen. A control module may include a Data Handling Unit (DHU). The projection module may include a side projection lamp.

According to the invention, the projection module comprises a second control module.

In the following, the working diagram of the vehicle courtesy projection system of the embodiment of the invention is briefly described by using the mobile phone or the central control screen as the trigger module. In an embodiment, as shown in FIG. 2, the user can set the projection information in the mobile phone and then transmit the projection information through the Wireless network technology (WIFI), Universal Serial Bus (USB) or Bluetooth, etc. send the projection information to the DHU, and then the DHU uses Low-Voltage Differential Signaling LVDS signal line or Ethernet sends the projection information to the second control module, and the second control module controls the side projection lamp to realize the color dynamic and static pattern or video projection. In another feasible scheme, the user sets the projection information in the mobile phone and then sends the projection information to the DHU through WIFI, USB or Bluetooth, etc., and then the DHU sends the projection information to the second control module through the Controller Area Network (CAN) line. The second control module pre-stores the received content in its own memory, and controls the side projection lamp to realize the color dynamic and static pattern or video projection based on the projection information.

In embodiments of the invention, the first control module can be specifically used for:
receiving projection instruction and projection content; wherein, the projection instruction includes all of the following instructions: start projection instruction, pause projection instruction, switch projection instruction and close projection instruction; and wherein the projection content includes all of the following: video, dynamic pattern, static pattern and preset projection sequence;
controlling the projection module to project the projected content according to the projection instruction.

In the embodiment of the invention, the user can set the projection information through the client, the client receives the projection information set by the user and sends it to the trigger module, and the trigger module sends the projection information to the first control module; the first control module is capable of controlling the projection module to perform color static pattern, dynamic pattern or video projection, etc., according to the projection instruction and the projection content.

According to the invention, the trigger module includes a receiving module and a first storage module;

The receiving module is configured to receive the projection information and send the projection information to the first storage module; the first storage module is configured to receive the projection information and store it. After the first storage module stores the projection information, if the projection information does not need to be changed, the user does not need to set the projection information again. The client can directly send the projection information to the first storage module, and the first storage module sends the projection information to the first control module.

According to the invention, the projection module includes a projection component and a second control module; the second control module is connected with the first control module; the first control module can send the projection information to the second control module, the second control module can control the projection component to project according to the projection information, and the second control module can store the projection information; that is, the first control module can send the projection information to the second control module in the projection module for projection control and storage. The second control module can realize the pre-storage of user-defined projection information into the projection module, and the projection module can be directly connected with other controllers or control components or integrated with the second control module according to the requirements of projection control.

In an embodiment of the invention, the projection assembly may include at least one side projection lamp. The projection assembly can be arranged in the exterior rearview mirror of the vehicle, and can also be arranged on the door or the door threshold position.

In an embodiment of the invention, the projection assembly may include an LCOS display device, an LCD display device, or a DLP projection device. In other words, the invention can adopt LCOS, LCD or DLP projection technology to realize full color video projection function.

In an embodiment of the invention, the first control module and the projection module can be connected by LVDS, Ethernet or controller area network. It can realize the user's complete customization of projection content and real-time projection control.

The second aspect of the invention relates to a vehicle, including the vehicle courtesy projection system.

## Claims

1. A vehicle courtesy projection system, **characterized in that**, comprises: a trigger module, a first control module and a projection module, wherein the trigger module and the first control module are adapted to be located within the vehicle;
the trigger module connected with the first control module, and the first control module connected with the projection module;
the trigger module configured to receive a projection information sent by a client and send the projection information to the first control module, wherein the client comprises a smart phone;
the first control module configured to receive the projection information and control the projection module to project according to the projection information;
the projection information comprises a projection instruction and projection content, and the first control module is configured to:
receive projection instruction and projection content;
control the projection module to project the projected content according to the projection instruction;
the projection instruction comprises all of a start projection instruction, a pause projection instruction, a switch projection instruction and a close projection instruction;
the projection content comprises all of a video, a dynamic pattern, a static pattern and a preset projection sequence;
the trigger module comprises a receiving module and a first storage module;
the receiving module is configured to receive the projection information and send the projection information to the first storage module;
the first storage module is configured to receive the projection information and store it;
the projection module comprises a projection component and a second control module;
the second control module connected with the first control module;
the first control module can send the projection information to the second control module, the second control module can control the projection component to project according to the projection information, and the second control module can store the projection information.

2. The vehicle courtesy projection system according to claim **1, characterized in that**, the projection component comprises at least one projection light adapted to be mounted on a side of the vehicle.

3. The vehicle courtesy projection system according to claim **2, characterized in that**, the projection component is configured to be arranged in the exterior rearview mirror of the vehicle and/or on the door or the door threshold position.

4. The vehicle courtesy projection system according to claim **2, characterized in that**, the projection component comprises a LCOS display device, a LCD display device or a DLP projection device.

5. The vehicle courtesy projection system according to claim **1, characterized in that**,
the first control module is connected with the projection module by LVDS, Ethernet, or controller area network.

6. A vehicle, **characterized in that**, comprising a vehicle courtesy projection system according to any one of claims **1-5.**

## Patentansprüche

1. Höflichkeitsprojektionssystem für Fahrzeug, **dadurch gekennzeichnet, dass** es Folgendes umfasst: ein Auslösemodul, ein erstes Steuermodul und ein Projektionsmodul, wobei das Auslösemodul und das erste Steuermodul so angepasst sind, dass sie innerhalb des Fahrzeugs lokalisiert sein können;
wobei das Auslösemodul mit dem ersten Steuermodul verbunden und das erste Steuermodul mit dem Projektionsmodul verbunden ist;
wobei das Auslösemodul so konfiguriert ist, dass es eine von einem Client gesendete Projektionsinformation empfängt und die Projektionsinformation an das erste Steuermodul sendet, wobei der Client ein Smartphone umfasst;
wobei das erste Steuermodul so konfiguriert ist, dass es die Projektionsinformation empfängt und das Projektionsmodul so steuert, dass es gemäß der Projektionsinformation projiziert;
wobei die Projektionsinformation eine Projektionsanweisung und einen Projektionsinhalt umfasst und das erste Steuermodul so konfiguriert ist, dass es:
die Projektionsanweisung und den Projektionsinhalt empfängt;
das Projektionsmodul so steuert, dass es den projizierten Inhalt gemäß der Projektionsanweisung projiziert;
wobei die Projektionsanweisung eine Startprojektionsanweisung, eine Pausenprojektionsanweisung, eine Umschaltprojektionsanweisung und eine Schließprojektionsanweisung umfasst;
wobei der Projektionsinhalt ein Video, ein dynamisches Muster, ein statisches Muster und eine voreingestellte Projektionssequenz umfasst;
wobei das Auslösemodul ein Empfangsmodul und ein erstes Speichermodul umfasst;
wobei das Empfangsmodul so konfiguriert ist, dass es die Projektionsinformation empfängt und die Projektionsinformation an das erste Speichermodul sendet;
wobei das erste Speichermodul so konfiguriert ist, dass es die Projektionsinformation empfängt und speichert;
wobei das Projektionsmodul eine Projektionskomponente und ein zweites Steuermodul umfasst;
wobei das zweite Steuermodul mit dem ersten Steuermodul verbunden ist;
wobei das erste Steuermodul die Projektionsinformation an das zweite Steuermodul senden kann, wobei das zweite Steuermodul die Projektionskomponente so steuern kann, dass sie gemäß der Projektionsinformation projiziert, und wobei das zweite Steuermodul die Projektionsinformation speichern kann.

2. Höflichkeitsprojektionssystem für Fahrzeug nach Anspruch 1, **dadurch gekennzeichnet, dass** die Projektionskomponente mindestens ein Projektionslicht umfasst, das so angepasst ist, dass es an einer Seite des Fahrzeugs angebracht werden kann.

3. Höflichkeitsprojektionssystem für Fahrzeug nach Anspruch 2, **dadurch gekennzeichnet, dass** die Projektionskomponente so konfiguriert ist, dass sie im Außenspiegel des Fahrzeugs und/oder auf der Tür oder der Türschwelle angeordnet werden kann.

4. Höflichkeitsprojektionssystem für Fahrzeug nach Anspruch 2, **dadurch gekennzeichnet, dass** die Projektionskomponente eine LCOS-Anzeigevorrichtung, eine LCD-Anzeigevorrichtung oder eine DLP-Projektionsvorrichtung umfasst.

5. Höflichkeitsprojektionssystem für Fahrzeug nach Anspruch 1, **dadurch gekennzeichnet, dass**
das erste Steuermodul über LVDS, Ethernet oder Controller-Area-Network mit dem Projektionsmodul verbunden ist.

6. Fahrzeug, **dadurch gekennzeichnet, dass** es ein Höflichkeitsprojektionssystem für Fahrzeug gemäß einem der Ansprüche 1 bis 5 umfasst.

## Revendications

1. Système de projection de courtoisie pour un véhicule, **caractérisé en ce qu'**il comprend
: un module de déclenchement, un premier module de commande et un module de projection, dans lequel le module de déclenchement et le premier module de commande sont adaptés pour être situés à l'intérieur du véhicule ;
le module de déclenchement est connecté au premier module de commande, et le premier module de commande est connecté au module de projection ;
le module de déclenchement est configuré pour recevoir une information de projection envoyée par un client et envoyer l'information de projection au premier module de commande, dans lequel le client comprend un téléphone intelligent ;
le premier module de commande est configuré pour recevoir l'information de projection et commander le module de projection à projeter en fonction de l'information de projection ;
l'information de projection comprend une instruction de projection et un contenu de projection, et le premier module de commande est configuré pour :
recevoir une instruction de projection et un contenu de projection ;
commander le module de projection à projeter le contenu projeté en fonction de l'instruction de projection ;
l'instruction de projection comprend l'ensemble d'une instruction de projection de démarrage, d'une instruction de projection de pause, d'une instruction de projection de commutation et d'une instruction de projection de fermeture ;
le contenu de projection comprend l'ensemble d'une vidéo, d'un motif dynamique, d'un motif statique et d'une séquence de projection prédéfinie ;
le module de déclenchement comprend un module de réception et un premier module de stockage ;
le module de réception est configuré pour recevoir l'information de projection et envoyer l'information de projection au premier module de stockage ;
le premier module de stockage est configuré pour recevoir l'information de projection et la stocker ;
le module de projection comprend un composant de projection et un second module de commande ;
le second module de commande est connecté au premier module de commande ;
le premier module de commande est capable d'envoyer l'information de projection au second module de commande, le second module de commande est capable de commander le composant de projection à projeter en fonction de l'information de projection, et le second module de commande est capable de stocker l'information de projection.

2. Système de projection de courtoisie pour un véhicule selon la revendication 1, **caractérisé en ce que** le composant de projection comprend au moins une lampe de projection adaptée pour être montée sur un côté du véhicule.

3. Système de projection de courtoisie pour un véhicule selon la revendication 2, **caractérisé en ce que** le composant de projection est configuré pour être disposé dans le rétroviseur extérieur du véhicule et/ou sur la porte ou la position de seuil de la porte.

4. Système de projection de courtoisie pour un véhicule selon la revendication 2, **caractérisé en ce que** le composant de projection comprend un dispositif d'affichage LCOS, un dispositif d'affichage LCD ou un dispositif de projection DLP.

5. Système de projection de courtoisie pour un véhicule selon la revendication 1, **caractérisé en ce que**,
le premier module de commande est connecté au module de projection par LVDS, Ethernet, ou un réseau local à contrôleur.

6. Véhicule, **caractérisé en ce qu'**il comprend un système de projection de courtoisie pour un véhicule selon l'une quelconque des revendications 1 à 5.
